# EUROPEAN PATENT SPECIFICATION

(11) **EP 0 736 246 B1**
(45) Date of publication and mention of the grant of the patent: **14.06.2000**
(21) Application number: 96200879.3
(22) Date of filing: 01.04.1996
(51) Int. Cl.: A01J 5/017, A01J 7/04

(54) **A method of positioning means for automatically milking animals, such as cows, as well as an implement for applying same**
Verfahren zur Positionierung von Mitteln zum automatischen Melken von Tieren, wie Kühe, und Vorrichtung zu deren Anwendung
Méthode pour positioner des moyens pour la traite automatique d'animaux, par exemple des vaches, et dispositif pour mise en oeuvre de cette méthode

(30) Priority: 03.04.1995 NL 1000010
(43) Date of publication of application: 09.10.1996
(73) Proprietor: MAASLAND N.V., 3155 PD Maasland (NL)
(72) Inventor: van den Berg, Karel, 2971 BR Bleskensgraaf (NL)
(74) Representative: Corten, Maurice Jean F.M.

(56) References cited:
- EP-A- 0 519 544
- EP-A- 0 572 068

## Description

The present invention relates to a method of positioning, by means of a robot construction, means for automatically milking animals, such as cows.

Such a method is known from EP-A-0 519 544. In this document, a plate pushed against the rear side of the animal is used as a reference plane, while, by means of a sensor attached to the robot construction, the position of the latter construction relative to the plate, and consequently relative to the animal, is determined.

The invention aims at improving this known method in such a way that a plate pushed against the rear side of the animal no longer needs to be used. For that purpose, according to the invention, the method is characterized in that the means for automatically milking are positioned in the longitudinal direction of the milking parlour relative to a reference plane situated transversely to said longitudinal direction, in which reference plane the centre of gravity of the relevant animal is located. In particular, this method is furthermore characterized in that, in the milking parlour, the pressure exercised by the animal with at least one foreleg and one hindleg on the floor thereof and the places on the floor where this pressure is exercised are determined and recorded in a computer, and that in the computer, with the aid of these data, the reference plane is defined. Making use of the pressure exercised by the animal on the floor of the milking parlour and the places on the floor where this pressure is exercised, for the purpose of obtaining position data for automatically milking animals, is known per se from EP-A-0 572 068. In this document, these data are used for determining the position of the udder and/or the teats of the animal, so that, by means of the robot construction, the means for automatically milking can be positioned under the udder of the animal to be milked. There is not used a reference plane through the animal's centre of gravity, whereby, also when the animal moves, the means for automatically milking can be positioned relative to this plane and be maintained in this position. Although the means for automatically milking may be brought in a position relative to the reference plane, that is fixed for all the animals, and, if required, may thereafter be accurately positioned under the animal's teats, it is also possible to record in the computer, for individual animals, the position of the udder and/or the teats relative to the reference plane. In the latter case, it will be desirable to dispose of the possibility to adapt in the computer, if required, the position of the udder and/or the teats of an animal relative to the reference plane, to the actual position the udder and/or the teats appear to have after the teat cups have been connected to the teats of the animal.

As soon as an animal moves in the milking parlour, in particular makes a step forwards or rearwards, or when the animal, while staying with its legs on the same place, moves more forwardly or rearwardly, the reference plane and, consequently, the means for automatically milking will move as well. In other words: upon moving of the animal in the longitudinal direction of the milking parlour, the means for automatically milking can be maintained in a fixed position relative to the reference plane. Although the robot construction may be arranged in a fixed position relative to the milking parlour, while, by means of guiding one or more arms of the robot construction, the position of the means for automatically milking may be maintained fixed relative to the reference plane, it is advantageous when the robot construction as a whole is positioned in the longitudinal direction of the milking parlour relative to said reference plane.

When an animal has entered the milking parlour, the robot construction will be brought from an inoperative position into a position defined relative to the reference plane, whereafter, according to the invention, the robot arm, serving as a carrier for the means for automatically milking and constituting part of the robot construction, pivots under the animal from the fixed position that the robot construction has taken relative to the reference plane. In a particular embodiment according to the invention, there is provided on the said robot arm a detector, in particular a laser detector, while, after the detector has been brought under the animal in a position in which the teats of the animal can be detected, upon moving of the animal, the teats will be followed by post-guiding the robot arm by means of the detector, and, as long as the teats have not yet been detected or as soon as the teats are no longer detected, they will be followed by post-guiding the robot arm in the reference plane.

Besides to a method, the invention also relates to an implement for positioning, by means of a robot construction movably arranged in the longitudinal direction of the milking parlour, means for automatically milking animals, such as cows, which implement is provided with elements that are sensitive to pressure, by means of which the pressure exercised by the animal with at least one foreleg and one hindleg on the floor of the milking parlour and the places on the floor where this pressure is exercised are determined and recorded in a computer, which implement is then characterized in that the computer is equipped so as to define, with the aid of these data, a reference plane situated transversely to the longitudinal direction of the milking parlour, in which reference plane the centre of gravity of the relevant animal is located, and to position the means for automatically milking in the longitudinal direction of the milking parlour relative to said reference plane. In a practical embodiment of such an implement, there are disposed elements sensitive to pressure in or on the floor of the milking parlour, at those places where the animal can put its legs. Although it is sufficient to dispose elements sensitive to pressure on the place where the animal can stand with only one hindleg and only one foreleg, it is advantageous to dispose these elements at those places where the animal can stand with all its legs. The implement according to the invention is additionally provided with an animal identification system cooperating with the computer, while, for each animal, there is recorded in the computer the position of the udder and/or the teats relative to the reference plane.

For a better understanding of the invention and to show how the same may be carried into effect, reference will now be made, by way of example, to the accompanying drawings, in which:
Figure 1 shows, in plan view, the implement according to the invention, in which there are brought arms of the robot construction under an animal present in the milking parlour;
Figure 2 is a side view of the implement shown in Figure 1, in which the robot construction is in the inoperative position, and

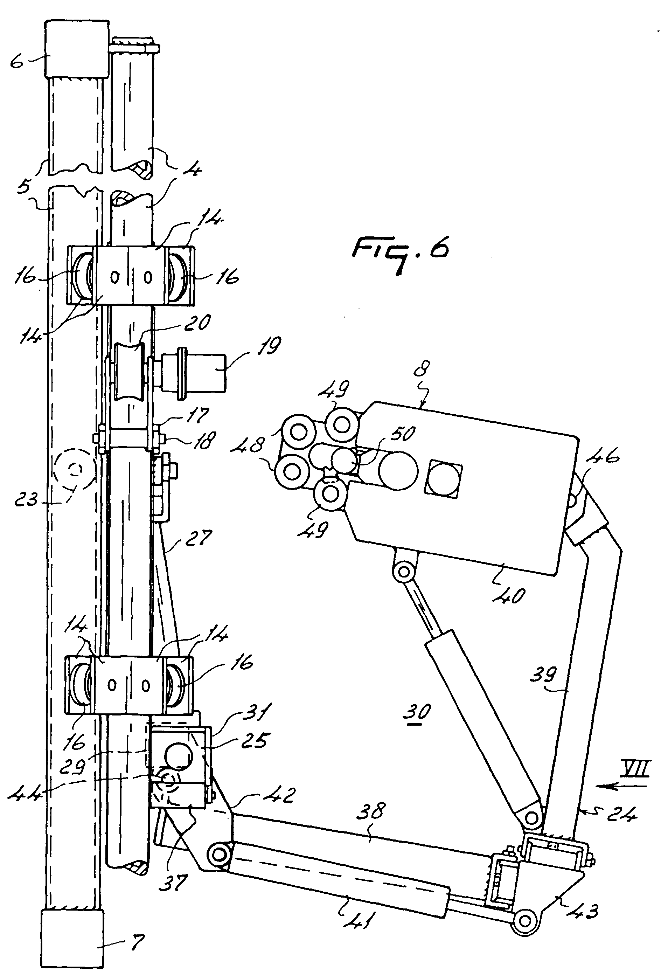

Figures 3 to 8 show more in detail various parts of the implement represented in Figures 1 and 2.

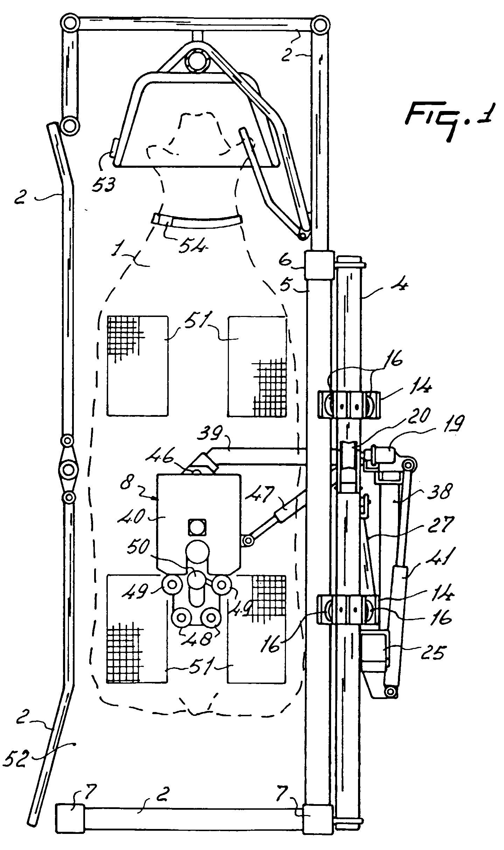

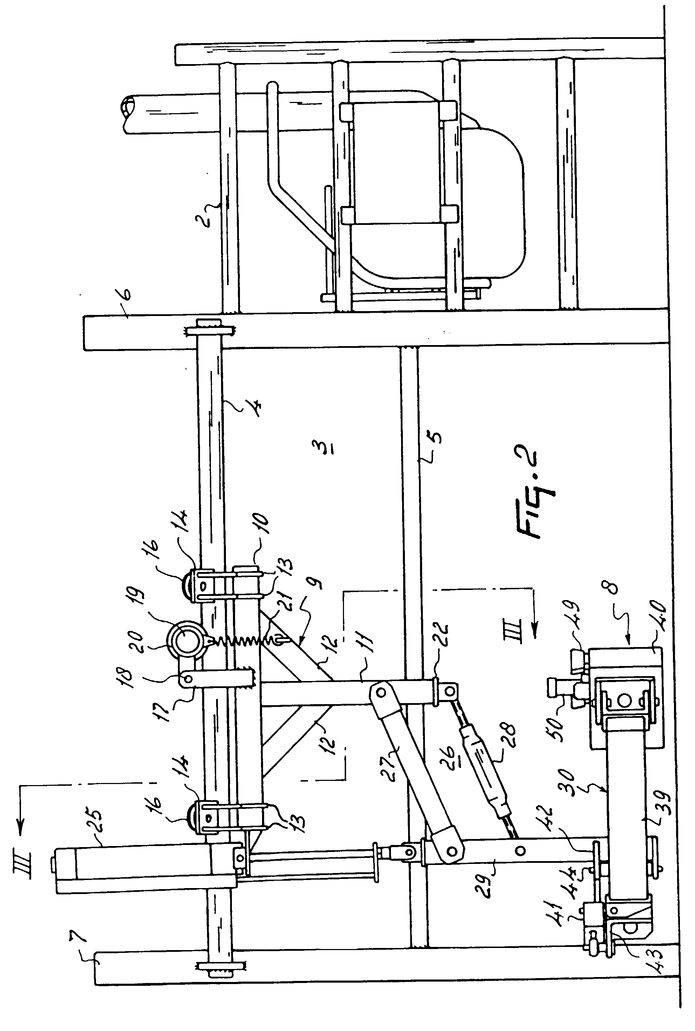

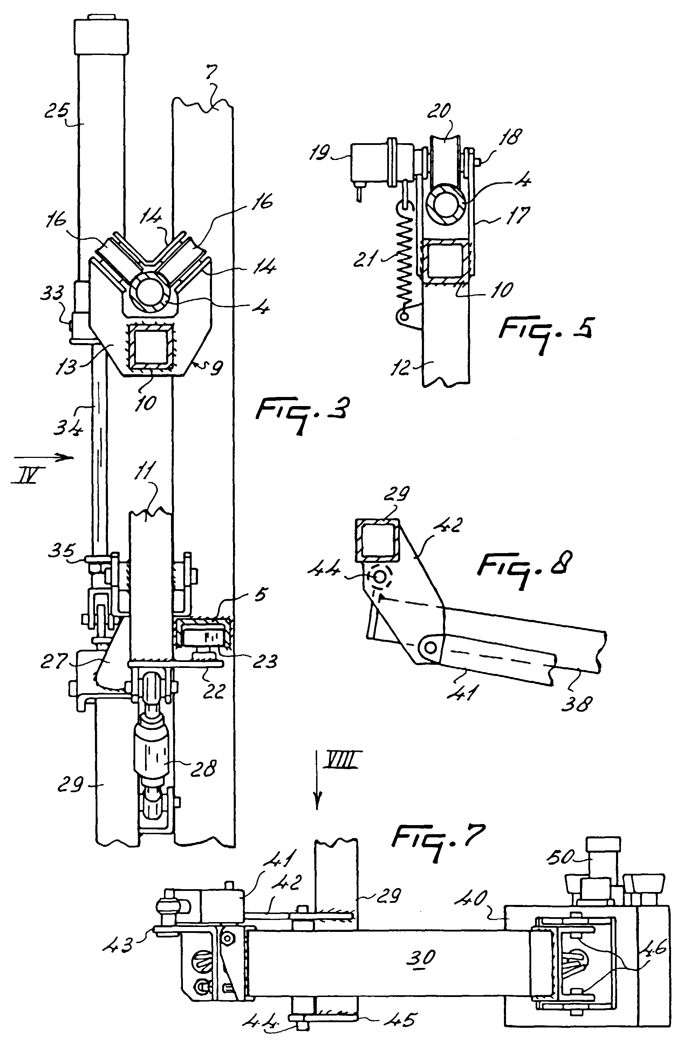

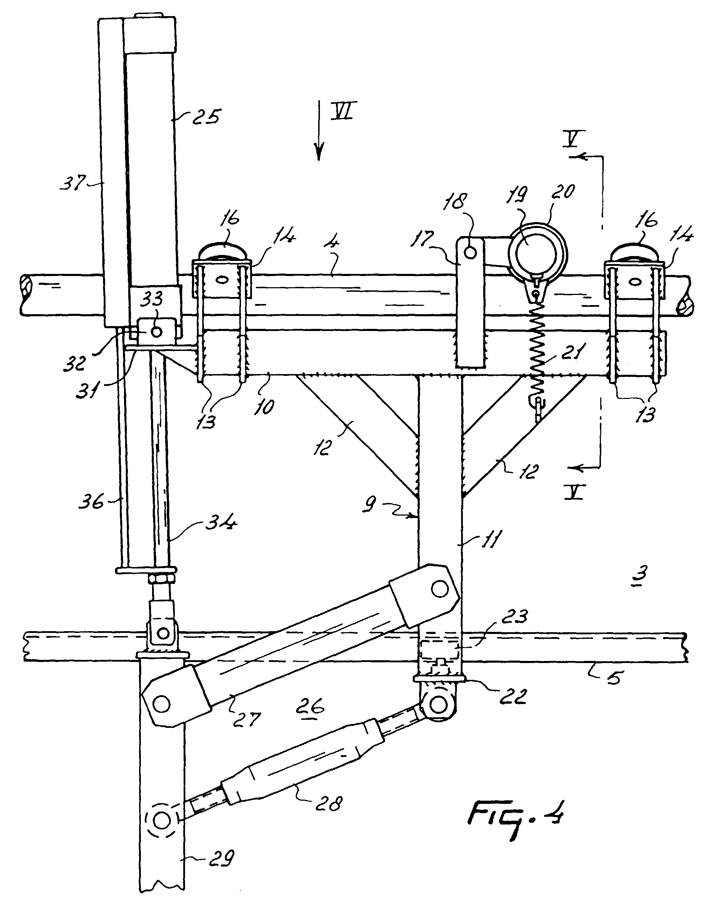

In the plan view of the implement as shown in Figure 1, there is represented a cow 1 present in the milking parlour, which is surrounded by a fencing 2 allowing the animal a limited freedom of movement. The animal can enter the milking parlour via a longitudinal side near the rear thereof and leave same via the same longitudinal side near the front thereof. The front side of the milking parlour being provided with a feeding installation, the cow will advance sufficiently far and will come into a position in which it can be milked easily. At the other longitudinal side of the milking parlour, being opposite to the one including the entrance and exit, there is provided a fixed frame 3 constituting part of the fencing 2, which frame 3 includes a first frame part 4 and a second frame part 5. The first frame part 4 extends parallel to the second frame part 5 and is situated substantially thereabove. The first frame part 4 is fixed to the outside of two vertical stands 6 and 7 constituting part of the fencing 2, while the second frame part 5 is fixed therebetween. To the first frame part 4, there is movably attached a milking robot 8 for automatically milking animals, while this milking robot is supported against the second frame part 5 disposed at such a height that the arms of the milking robot 8 are movable therebelow under the cow present in the milking parlour. The milking robot 8 comprises a carrier frame 9 for its further parts. By designing the upper frame part 4 as a rail, the carrier frame 9, and consequently the entire milking robot 8, can easily be moved along this frame part. The carrier frame 9 includes a beam 10 extending substantially parallel to the first frame part 4, a beam 11 directed vertically downwardly perpendicular to the beam 10 and fixed thereto, and two struts 12. Near the ends of the beam 10, there are provided pairs of supporting elements 13. To each pair of supporting elements 13, by means of supporting plates 14 fixed thereto, at an angle of approximately 45° there are provided two rollers 16, constituting a rollers pair 15, in such a way that the carrier frame 9 is suspended easily movably along the upper frame part 4, therebelow. On the beam 10 of the carrier frame 9, on both sides, there are provided two carriers 17, to which there is attached, movably about a pivot shaft 18, a motor 19. By this motor 19 there is driven a roller 20, preferably having a rubber surface, which roller is pushed against the upper frame part 4 by means of a spring member 21. The spring member 21 being active between the motor 19 and the carrier frame 9, the roller 20 to be driven by the motor 19 is kept pushed against the upper frame part 4, so that, when the motor is driven, it will be moved along the upper frame part 4 and, consequently, the entire carrier frame 9 will be moved. By means of a non-shown computer, it will be possible to guide the milking robot, in the longitudinal direction of the milking parlour, from an inoperative position to a starting position, in which the milking robot arms are moved under the animal present in the milking parlour, and to follow the movements of the animal in the longitudinal direction thereof. For that purpose, there is defined in the computer, in a still to be described way, a reference plane transversely to the longitudinal direction of the milking parlour and through the centre of gravity of the animal. By means of the computer and the motor 19 controlled by the same, the milking robot 8 can be moved in the longitudinal direction of the milking parlour in such a way that the distance between the reference plane and the milking robot is brought, respectively maintained, at an adjusted value. In its inoperative position, the milking robot 8 has been moved as rearwardly as possible relative to the frame parts 4 and 5. Upon a forward or backward movement of the cow, the position of the reference plane will determine that of the animal in the milking parlour in the longitudinal direction thereof, so that, while maintaining the distance in longitudinal direction between the reference plane and the milking robot 8, the latter can follow the movements of the cow in the longitudinal direction of the milking parlour. In the present embodiment, the beam 11 of the carrier frame 9 extends vertically downwardly to somewhat below the second frame part 5. At the lower side of this beam 11, there is disposed a horizontal, rearwardly extending strip 22 which is provided with a freely rotatable roller element 23. The lower frame part 5 is constituted by a rail, in particular one designed as a U-shaped beam, while the freely rotatable roller element 23 is arranged in such a way that it is movable between the two upright edges of the U-shaped beam. In this manner, the milking robot 8 is supported against the lower frame part 5 and, when being moved by means of the motor over the first frame part 4, can easily move along the second frame part 5. Besides the carrier frame 9, the milking robot comprises a robot construction 24 which, by means of a control cylinder 25, is movable substantially vertically relative to the carrier frame 9. By means of a quadrangle construction 26, the robot construction 24 is movably connected with the carrier frame 9. In the embodiment shown, the upper arm 27 of this quadrangle construction 26 has a fixed length, while the lower arm 28 thereof is adjustable in length so as to enable the robot construction 24 to be adjusted to a limited extent. The robot construction 24 comprises a substantially vertical robot arm 29 as well as robot arms 30 that are movable in a substantially horizontal plane. By means of the quadrangle construction 26, the robot arm 29 is connected with the beam 11 of the carrier frame 9. The control cylinder 25 is active between the carrier frame 9 and the robot arm 29. As, by means of the lower arm 28 of the quadrangle construction 26, the orientation of the robot arm 29 is slightly adjustable, the spatial position of the action point of the control cylinder 25 at the robot arm 29 is not entirely fixed. For that reason, the housing of the control cylinder 25 is provided, at least pivotably to a limited extent, on a carrier plate 31 attached to the beam 10 of the carrier frame 9. On this carrier plate 31 there are disposed supports 32, wherebetween the housing of the control cylinder 25 is capable of being moved about a pivot shaft 33. In the present embodiment, the control cylinder is designed as a servo-pneumatic positioning cylinder. This means that, at the lower end of the piston rod 34, by means of a plate 35 fixed thereto, there is attached a position feedback rod 36, by means of which, in a part 37 of the control cylinder, a potentiometer will deduce a signal indicating the position of the piston rod relative to the cylinder housing, while, with the aid of the signal supplied by the potentiometer, the position of the piston rod 34 relative to the cylinder housing can be post-guided to a preset position. Furthermore, the control cylinder 25 is provided with an overload protection enabling the robot construction 24 to be moved into its lowest position, as soon as the animal present in the milking parlour exercises a pressure thereon, e.g. by kicking. Figures 2 and 4 show the milking robot 8 in its inoperative position, in which it has been moved as rearwardly as possible and the robot construction 24 has been brought nearest possible to the soil. When a cow is present in the milking parlour and the milking process is to be started, the milking robot 8 is brought from its inoperative position into the starting position, i.e. into the position wherein the arms of the milking robot 8 can be moved to under the cow.

In the present embodiment, for that purpose, the milking robot includes arms 38, 39 and 40. The arms 38 and 39 are arranged at a fixed angle of 90° relative to each other. Therefore, the arms 38 and 39 are moved together, i.e. by a control cylinder 41 provided between a supporting plate 42 attached to the robot arm 29 and a connecting piece 43 disposed between the two arms 38 and 39. The two latter arms are pivotable about a substantially vertical pivot shaft 44 between the supporting plate 42 and a supporting plate 45, which latter is also rigidly connected to the robot arm 29, more in particular at the lower end thereof. The arm 40 is pivotable relative to the arm 39 about a substantially vertical pivot shaft 46 and pivots relative thereto by means of a control cylinder 47 disposed between the arm 40 and the end of the arm 39 that is situated near the connecting piece 43. Near the end of the arm 39, there are provided the teat cups 48 and 49 to be connected to the teats of the cow. Between the two teat cups 49 there is disposed a slide, which is movable on the arm 40 and on which there is provided a sensor 50 which, by a sectorwise scanning movement, can accurately determine the position of the teats, so that the control cylinders 25, 41 and 47 can be computer-controlled in such a way that the teat cups will be connected properly to the teats. The robot arms 38 - 40 having been brought to under the cow, they are in a relatively low position, in which the sensor 50 will not yet detect teats. By means of the control cylinder 25, the robot arms 38 - 40 are raised stepwise until the sensor 50 detects one or more teats of the animal.

The implement as shown in Figure 1 furthermore comprises elements 51 sensitive to pressure which, in the present embodiment, are disposed in the floor 52 of the milking parlour. In particular, the elements 51 sensitive to pressure are disposed in a lowered part of the floor 52, so that they are situated at the same level therewith. It will be obvious, however, that the elements 51 sensitive to pressure may also be arranged on the floor 52 of the milking parlour.

The elements 51 sensitive to pressure may be constituted by piezo-elements known per se. In the embodiment shown in Figure 1, the elements sensitive to pressure are disposed at four places in the floor 52 of the milking parlour. The places where the elements 51 sensitive to pressure are disposed are chosen in such a way that, when an animal enters the milking parlour, it stands with its legs on all four elements sensitive to pressure. The elements 51 sensitive to pressure may also be built up by a number of juxtaposed pressure cells, which may be designed as electro-mechanic contacts, as is detailed in EP-A-0 572 068.

The implement according to the invention is additionally provided with an animal identification system being in communication with the computer of the milking robot. The animal identification system is constituted by a sensor 53 arranged near the feeding trough and being in communication with the computer and a transponder 54 disposed around the neck of the cow 1.

The function of the above-described implement will be explained in what follows:

When a cow enters the milking parlour, the sensor 53 receives from the transponder 54 a code that is unique for the relevant cow. With the aid of said code, the computer connected with the sensor 53 defines which cow has occupied the milking parlour. In the (non-shown) computer, all the known data relating to the animal are retrieved and kept stand by. After the cow has entered the milking parlour, the elements 51 sensitive to pressure are activated due to the fact that the cow has put its legs on said elements 51. The surface of the elements 51 sensitive to pressure being many times larger than that of the underside of the cow's legs, only a number of pressure cells is pressed. The pressure cells pressed by the animal's legs supply a signal to the computer, with the aid of which the position of the cow's legs on the floor 52 of the milking parlour can exactly be defined. For that purpose the position of each pressure cell is recorded in the memory of the computer. With the aid of the pressure cells, the pressure exercised by the animal's legs is then determined. On the basis of the latter information and the places where this pressure is exercised, there can be defined in the computer the position of a reference plane in the longitudinal direction of the milking parlour and through the centre of gravity of the animal. When the animal moves, the reference plane moves as well. Furthermore, for each animal, there is recorded in the memory of the computer the position of the udder and/or the teats relative to said reference plane. The position of the reference plane having been determined with the aid of the signals supplied by the elements 51 sensitive to pressure, the position of the udder and/or the teats relative to the reference plane for the relevant animal is read out of the memory of the computer. On the basis of the coordinates read out, the teat cups 48, 49 are guided, by means of the robot construction 24, to the udder and/or the teats. For that purpose, from the position taken by the entire robot construction 24 relative to the reference plane, first the arms 38, 39, 40 pivot under the cow. As soon as the robot arm 40 has been brought in the longitudinal direction under the cow in such a way that the detector 50 detects the teats thereof, by means of the detector 50, said robot arm 40, when the cow moves, will be post-guided to the teats by pivoting about the shaft 46, and by moving the entire robot construction 24 in the longitudinal direction of the milking parlour. When the teats remain within the range of the detector, it will be possible to determine their position and to guide the robot arm 40 in such a way that the teat cups 48, 49 can be connected. As long as the teats are not detected by the detector, or when the animal moves in such a way that the detector no longer detects the teats, then the robot arm 40 will be post-guided in the longitudinal direction in the reference plane, whereafter the teats will again have come within the range of the detector. Due to the fact that, for each animal, the position of the udder and/or the teats relative to the reference plane is known, it will always be possible, when the robot arm 40 has been post-guided in the longitudinal direction to the correct position relative to the reference plane, to make the teats fall within the range of the detector.

## Claims

1. A method of positioning, by means of a robot construction, means for automatically milking animals, such as cows, characterized in that the means for automatically milking are positioned in the longitudinal direction of the milking parlour relative to a reference plane situated transversely to said longitudinal direction, in which reference plane the centre of gravity of the relevant animal is located.

2. A method as claimed in claim 1, characterized in that, in the milking parlour, the pressure exercised by the animal with at least one foreleg and one hindleg on the floor thereof and the places on the floor where this pressure is exercised are determined and recorded in a computer, and that in the computer, with the aid of these data, the reference plane is defined.

3. A method as claimed in claim 1 or 2, characterized in that for individual animals the position of the udder and/or the teats relative to the reference plane is recorded in the computer.

4. A method as claimed in claim 3, characterized in that, if required, the position of the udder and/or the teats of an animal relative to the reference plane is adapted in the computer to the actual position the udder and/or the teats appear to have after the teat cups have been connected to the teats of the animal.

5. A method as claimed in any one of the preceding claims, characterized in that, upon moving of the animal in the longitudinal direction of the milking parlour, the means for automatically milking are maintained in a fixed position relative to the reference plane.

6. A method as claimed in any one of the preceding claims, characterized in that the robot construction as a whole is positioned in the longitudinal direction of the milking parlour relative to said reference plane.

7. A method as claimed in claim 6, characterized in that the robot arm, serving as a carrier for the means for automatically milking and constituting part of the robot construction, pivots under the animal from a fixed position that the robot construction has taken relative to the reference plane.

8. A method as claimed in claim 7, characterized in that there is provided on the robot arm a detector, in particular a laser detector, while, after the detector has been brought under the animal in a position in which the teats of the animal can be detected, upon moving of the animal, the teats will be followed by post-guiding the robot arm by means of the detector, and, as long as the teats have not yet been detected or as soon as the teats are no longer detected, they will be followed by post-guiding the robot arm in the reference plane.

9. An implement for positioning, by means of a robot construction (8), means for automatically milking animals, such as cows, in which implement the method as claimed in any one of the preceding claims can be applied and which implement is provided with elements (51) that are sensitive to pressure, by means of which the pressure exercised by the animal with at least one foreleg and one hindleg on the floor (52) of the milking parlour and the places on the floor (52) where this pressure is exercised are determined and recorded in a computer, characterized in that the computer is equipped so as to define, with the aid of these data, a reference plane situated transversely to the longitudinal direction of the milking parlour, in which reference plane the centre of gravity of the relevant animal is located, and to position, by means of the robot construction, the means for automatically milking in the longitudinal direction of the milking parlour relative to said reference plane.

10. An implement as claimed in claim 9, characterized in that in or on the floor (52) of the milking parlour, at those places where the animal can put its legs, there are disposed elements (51) sensitive to pressure.

11. An implement as claimed in claim 9 or 10, characterized in that there is provided an animal identification system (53, 54) cooperating with the computer, and that, for each animal, there is recorded in the computer the position of the udder and/or the teats relative to the reference plane.

## Patentansprüche

1. Verfahren zum Positionieren einer Vorrichtung zum automatischen Melken von Tieren, wie z. B. Kühen, mittels einer Roboter-Konstruktion,
dadurch gekennzeichnet, daß die Vorrichtung zum automatischen Melken in Längsrichtung des Melkstandes relativ zu einer Bezugsebene angeordnet ist, die sich quer zu der Längsrichtung erstreckt, und in der der Schwerpunkt des jeweiligen Tieres liegt.

2. Verfahren nach Anspruch 1,
dadurch gekennzeichnet, daß in dem Melkstand der Druck, der von dem Tier mit mindestens einem Vorderbein und einem Hinterbein auf den Melkstandboden ausgeübt wird, und die Stellen des Bodens, auf die dieser Druck ausgeübt wird, von einem Computer ermittelt und aufgezeichnet werden, und daß in dem Computer mit Hilfe dieser Daten die Bezugsebene definiert wird.

3. Verfahren nach Anspruch 1 oder 2,
dadurch gekennzeichnet, daß für einzelne Tiere die Position des Euters und/oder der Zitzen relativ zu der Bezugsebene im Computer aufgezeichnet wird.

4. Verfahren nach Anspruch 3,
dadurch gekennzeichnet, daß bei Bedarf die Position des Euters und/oder der Zitzen eines Tieres relativ zu der Bezugsebene im Computer an die tatsächliche Position angeglichen wird, die das Euter und/oder die Zitzen aufzuweisen scheinen, nachdem die Zitzenbecher an die Zitzen des Tieres angeschlossen worden sind.

5. Verfahren nach einem der vorhergehenden Ansprüche,
dadurch gekennzeichnet, daß die Vorrichtung zum automatischen Melken beim Bewegen des Tieres in Längsrichtung des Melkstandes in fester Lage relativ zu der Bezugsebene gehalten wird.

6. Verfahren nach einem der vorhergehenden Ansprüche,
dadurch gekennzeichnet, daß die Roboter-Konstruktion als Ganzes relativ zu der Bezugsebene in Längsrichtung des Melkstandes angeordnet ist.

7. Verfahren nach Anspruch 6,
dadurch gekennzeichnet, daß der Roboterarm, der als Träger für die Vorrichtung zum automatischen Melken dient und Teil der Roboter-Konstruktion ist, aus einer festen Position der Roboter-Konstruktion relativ zu der Bezugsebene unter das Tier geschwenkt wird.

8. Verfahren nach Anspruch 7,
dadurch gekennzeichnet, daß an dem Roboterarm ein Detektor, insbesondere ein Laserdetektor, angeordnet ist, wobei nach Bewegen des Detektors unter das Tier in eine Position, in der die Zitzen des Tieres detektierbar sind, den Zitzen beim Bewegen des Tieres durch Nachführen des Roboterarmes mittels des Detektors gefolgt wird, und wobei den Zitzen durch Nachführen des Roboterarmes in der Bezugsebene gefolgt wird, solange die Zitzen noch nicht detektiert worden sind, oder sobald die Zitzen nicht mehr detektiert werden.

9. Gerät zum Positionieren einer Vorrichtung zum automatischen Melken von Tieren, wie z. B. Kühen, mittels einer Roboter-Konstruktion (8), bei dem das Verfahren nach einem der vorhergehenden Ansprüche angewendet werden kann, und das auf Druck ansprechende Elemente (51) aufweist, mittels derer der Druck, der von dem Tier mit mindestens einem Vorderbein und einem Hinterbein auf den Boden (52) des Melkstandes ausgeübt wird, und die Stellen des Bodens (52), auf die dieser Druck ausgeübt wird, von einem Computer ermittelt und aufgezeichnet werden,
dadurch gekennzeichnet, daß der Computer dazu ausgelegt ist, mit Hilfe dieser Daten eine Bezugsebene zu definieren, die sich quer zur Längsrichtung des Melkstandes erstreckt, und in der der Schwerpunkt des jeweiligen Tieres liegt, und daß der Computer ferner dazu ausgelegt ist, mittels der Roboter-Konstruktion die Vorrichtung zum automatischen Melken in Längsrichtung des Melkstandes relativ zu der Bezugsebene zu positionieren.

10. Gerät nach Anspruch 9,
dadurch gekennzeichnet, daß in oder auf dem Boden (52) des Melkstandes an den Stellen, wo das Tier seine Füße hinstellen kann, auf Druck ansprechende Elemente (51) angeordnet sind.

11. Gerät nach Anspruch 9 oder 10,
dadurch gekennzeichnet, daß ein mit dem Computer zusammenwirkendes Tieridentifikationssystem (53, 54) vorhanden ist, und daß für jedes Tier in dem Computer die Position des Euters und/oder der Zitzen relativ zu der Bezugsebene aufgezeichnet wird.

## Revendications

1. Procédé de positionnement, par l'intermédiaire d'une construction de robot, de moyens pour traire automatiquement des animaux, tels que des vaches, caractérisé en ce que les moyens pour traire automatiquement sont positionnés dans la direction longitudinale du box de traite par rapport à un plan de référence situé transversalement à ladite direction longitudinale, plan de référence dans lequel est situé le centre de gravité de l'animal concerné.

2. Procédé selon la revendication 1, caractérisé en ce que, dans le box de traite, la pression exercée par l'animal ayant au moins une patte avant et une patte arrière sur le sol de celui-ci et les emplacements sur le sol où cette pression est exercée sont déterminés et enregistrés dans un ordinateur, et en ce que, dans l'ordinateur, à l'aide de ces données, le plan de référence est défini.

3. Procédé selon la revendication 1 ou 2, caractérisé en ce que pour des animaux individuels, la position du pis et/ou des trayons par rapport au plan de référence est enregistrée dans l'ordinateur.

4. Procédé selon la revendication 3, caractérisé en ce que, si on le désire, la position du pis et/ou des trayons d'un animal par rapport au plan de référence est adaptée dans l'ordinateur à la position réelle qu'apparaissent avoir le pis et/les trayons, après que les gobelets trayeurs aient été reliés aux trayons de l'animal

5. Procédé selon l'une quelconque des revendications précédentes, caractérisé en ce que, lors d'un déplacement de l'animal dans la direction longitudinale du box de traite, les moyens pour traire automatiquement sont maintenus dans une position fixe par rapport au plan de référence.

6. Procédé selon l'une quelconque des revendications précédentes, caractérisé en ce que la construction de robot dans son ensemble est positionnée dans la direction longitudinale du box de traite par rapport audit plan de référence.

7. Procédé selon la revendication 6, caractérisé en ce que le bras de robot, en tant que support des moyens pour traire automatiquement et que partie constitutive de la construction de robot, pivote sous l'animal à partir d'une position fixée que la construction de robot a prise par rapport au plan de référence.

8. Procédé selon la revendication 7, caractérisé en ce qu'un détecteur est fourni sur le bras de robot, en particulier un détecteur à laser, alors que, après que le détecteur ait été amené sous l'animal dans une position dans laquelle les trayons de l'animal peuvent être détectés, lors d'un déplacement de l'animal, les trayons vont être suivis par guidage ultérieur du bras de robot par l'intermédiaire du détecteur, et, aussi longtemps que les trayons n'ont pas encore été détectés ou aussitôt que les trayons ne sont plus détectés, ils vont être suivis en guidant ultérieurement le bras de robot dans le plan de référence.

9. Dispositif de positionnement, par l'intermédiaire d'une construction de robot (8), de moyens pour traire automatiquement des animaux, tels que des vaches, dans lequel le procédé selon l'une quelconque des revendications précédentes peut être appliqué et qui est muni d'éléments (51) qui sont sensibles à une pression, par l'intermédiaire desquels la pression exercée par l'animal à l'aide d'au moins une patte avant et une patte arrière sur le sol (52) du box de traite et les emplacements sur le sol (52) où cette pression exercée sont déterminés et enregistrés dans un ordinateur, caractérisé en ce que l'ordinateur est équipé de manière à définir, à l'aide de ces données, un plan de référence situé transversalement à la direction longitudinale du box de traite, plan de référence dans lequel est situé le centre de gravité de l'animal concerné, et pour positionner, par l'intermédiaire de la construction de robot, les moyens pour traire automatiquement, dans la direction longitudinale du box de traite par rapport audit plan de référence.

10. Dispositif selon la revendication 9, caractérisé en ce que dans le sol ou sur le sol (52) du box de traite, aux emplacements où l'animal peut mettre ses pattes, sont disposés des éléments (51) sensibles à une pression.

11. Dispositif selon la revendication 9 ou 10, caractérisé en ce qu'il est fourni un système d'identification d'animal (53, 54) coopérant avec l'ordinateur, et en ce que, pour chaque animal, on enregistre dans l'ordinateur la position du pis et/ou des trayons par rapport au plan de référence.
